# EUROPÄISCHE PATENTSCHRIFT

(11) **EP 0 915 349 B1**
(45) Veröffentlichungstag und Bekanntmachung des Hinweises auf die Patenterteilung: **04.07.2001**
(21) Anmeldenummer: 98121265.7
(22) Anmeldetag: 09.11.1998
(51) Int. Cl.: G01S 13/89, H01Q 21/20

(54) **Radarsystem zum Abbilden von Sektoren**
Radarsystem for imaging of sectors
Système de radar avec visualisation de secteurs

(30) Priorität: 10.11.1997 DE 19749461
(43) Veröffentlichungstag der Anmeldung: 12.05.1999
(73) Patentinhaber: Deutsches Zentrum für Luft- und Raumfahrt e.V., 53175 Bonn (DE)
(72) Erfinder: Witte, Franz, 86932 Pürgen Lengenfeld (DE); Moreira, Alberto, Dr., 85748 Garching (DE); Keydel, Wolfgang, Dr., 82229 Hechendorf (DE)
(74) Vertreter: von Kirschbaum, Albrecht, Dipl.-Ing.

(56) Entgegenhaltungen:
- DE-A- 4 242 532
- DE-A- 19 705 795
- DE-C- 4 007 611
- DE-C- 4 007 612
- US-A- 4 675 677

## Beschreibung

Die Erfindung betrifft ein Radarsystem gemäß dem Oberbegriff des Patentanspruchs 1.

Derartige Antennen sind aus DE 40 07 611, DE 40 07 612 bekannt, wobei von fliegenden Trägern aus Land- oder Meeresflächen in einem vorausliegenden Sektor zweidimensional abgebildet werden. Die Antennen sind starr an einem Träger angebracht und im Falle der DE 40 07 611 jeweils aus einer Anzahl geradlinig in einer Reihe nebeneinander angeordneter Einzelelemente, oder im Falle von DE 40 07 612 auch aus einer Anzahl geradlinig nebeneinander in zwei Reihen übereinander angeordneter Einzelelemente gebildet.

Bei einer vorgegebenen Aperturlänge ℓ jedes Einzelelements und bei einem der Aperturlänge ℓ (DE 40 07 611) bzw. der halben Aperturlänge ℓ/2 (DE 40 07 612) entsprechendem Abstand von n Einzelelementen weist die Antenne eine Antennenlänge L = n · ℓ (DE 40 07 611) bzw. eine Antennenlänge L = n · ℓ/2 (DE 40 07 612) auf. Hierbei kann in dem zuerst erwähnten Fall (DE 40 07 611) von einem Einzelelement auch inkohärent gesendet und anschließend mit den übrigen Einzelelementen gleichzeitig empfangen werden. Bei beiden Antennenausführungen kann jeweils mittels der Einzelelemente kohärent ein Senden und anschließend ein Empfangen nacheinander, und zwar vom ersten bis zum letzten der Anzahl Einzelelemente, erfolgen.

Zur Realisierung einer digitalen Kopplung der Einzelelemente wird jedes Einzelelement gesondert digital ausgewertet und durch Korrelation einer speziellen, vorgegebenen Referenzfunktion wird in beiden Fällen für jeden Winkelbereich eine digitale Verarbeitung durchgeführt.

Bei Einsatz dieser bekannten Antennen mit starr montierten, geradlinig angeordneten Einzelelementen können bei einem Vorwärtssicht-Radar mit entsprechenden nachgeordneten und ausgelegten Verarbeitungsverfahren die nachstehend wiedergegebenen Vorteile erzielt werden:
a) eine hohe Schwenkgeschwindigkeit der Antennenkeule, da diese nicht mechanisch, sondern elektronisch mit Hilfe einer speziellen Datenverarbeitung realisiert ist;
b) eine hohe Genauigkeit und dadurch eine bessere Qualität der Abbildung als bei allen bisher bekannten Verfahren und Geräten.
c) Ferner können die bekannten Antennen unabhängig von der Geschwindigkeit des Trägers eingesetzt werden.
d) Obendrein fallen bei den bekannten Antennen erheblich geringere Wartungskosten an.

Bei einem aus US 4 675 677 A bekannten Radarsystem mit geradliniger Antenne ist eine Vorwärtsbewegung erforderlich, um eine Dopplerauswertung nach dem SAR-Prinzip durchführen zu können. Die Verarbeitung und das Prinzip sind anders als beim vorstehend erläuterten und den Ausgangspunkt für die Erfindung darstellenden Radarsystem nach DE 40 07 612 C und DE 40 07 611 C.

Ein in DE 197 05 795 A vorgeschlagenes Radarsystem basiert auf der Tatsache, daß zwei Punktziele mit gleicher Entfernung zum Radar durch die Abbildung mit zwei unterschiedlichen Antennendiagrammen aufgelöst werden können. Dieses Prinzip hat keinerlei Berührungspunkte mit dem Radarsystem nach DE 40 07 612 C und DE 40 07 611 C, das den Ausgangspunkt für die Erfindung darstellt.

Aus DE 42 42 532 A ist ein Radarsystem mit einem Sender und einem Empfänger sowie einer Antenne zum Senden und Empfangen von Radarimpulsen bekannt, wobei die Antenne am Ende eines rotierenden Armes z.B. eines Hubschrauberrotors oder eines Drehkreuzes oberhalb der Rotorachse angeordnet ist. Ein solches Radarsystem mit synthetischer Apertur auf der Basis rotierender Antennen wird als ROSAR-System bezeichnet. Zur Erhöhung und Abschätzung der Auflösungsgenauigkeit in der Prozessorschaltung ist bei diesem bekannten System nun eine Komparatorschaltung vorgesehen, in der Abbildungsfehler festgestellt werden. Diese wirkt auf eine Schaltung zur Korrektur der "Range Curvature"-Abweichung ein, so daß Abbildungsfehler vermieden werden. Die "Range Curvature"-Korrektur nach DE 42 42 532 A dient dazu, die Position der jeweiligen punktzielverläufe zu korrigieren.

Der Erfindung liegt die Aufgabe zugrunde, zur Verwendung in einem Radarsystem zum Abbilden von Sektoren die Ansteuerung der Antenne so zu gestalten, daß sich bei einer mit der Oberfläche eines beliebig geformten Trägers konformen, also nicht geradlinigen Antennenausbildung eine zumindest vergleichbare Leistung wie bei einer starren, geradlinig ausgebildeten Antennenausführung ergibt. Ferner soll durch den Einsatz der Antennen bei stationären, vor allem jedoch bei nicht-stationären, d.h. bewegten, insbesondere fliegenden Trägern deren Aerodynamik so wenig wie nur irgend möglich beeinflußt werden.

Gemäß der Erfindung wird diese Aufgabe bei einem Radarsystem zum zweidimensionalen Abbilden von Sektoren nach dem Oberbegriff des Anspruchs 1 durch die Merkmale in dessen kennzeichnenden Teil gelöst. Vorteilhafte Weiterbildungen des erfindungsgemäßen Radarsystems sind Gegenstand der auf den Anspruch 1 unmittelbar oder mittelbar rückbezogenen Unteransprüche.

Bei der erfindungsgemäßen Lösung der Aufgabe wird, insbesondere bei Vorsehen der Einzelelemente einer aus einer Anzahl solcher Einzelelemente bestehenden Antenne unmittelbar auf der Oberfläche eines Trägers beliebiger Form, das Antennendiagramm mit Hilfe eines Bildverarbeitungsverfahrens erzeugt, indem die Amplituden- und Phasenkorrektur so durchgeführt wird, daß die Einzelelemente der Antenne eine virtuelle geradlinige Ausrichtung erhalten und Laufzeitunterschiede zu den einzelnen Antennenelementen kompensiert werden. Hierbei wird die Phasenkorrektur aus dem geometrischen Abstand zwischen den jeweiligen real vorhandenen Einzelelementen der tatsächlich vorhandenen Antenne und deren virtuellen Position berechnet. Die Amplitudenkorrektur wird aus dem Verhältnis der jeweiligen Amplitudendiagramme der real vorhandenen Einzelelemente und der virtuellen Einzelelemente berechnet.

Mit Hilfe solcher gemäß der Erfindung durchgeführter Korrekturberechnungen wirkt dann die - auf einer Trägeroberfläche beliebiger Kontur bzw. Form aufgebrachte - Antenne im Ergebnis wie eine geradlinige Antenne und hat analog der geradlinigen, aus Einzelelementen bestehenden Antenne auch eine annähernd gleichgute Performance.

Bei Verwenden bekannten, aus einer Anzahl von Einzelelementen bestehenden Antennen braucht zur Berechnung des Antennendiagramms lediglich der Abstand zwischen den einzelnen Elementen bekannt zu sein. Alle übrigen Korrekturen werden dann mittels des Verarbeitungsprogramms durchgeführt.

Darüber hinaus ist gemäß der Erfindung die Antennenausführung den jeweiligen Einsatzerfordernissen angepaßt. U.U. können auch sehr große Antennen vorgesehen sein, die beispielsweise an den Nasen von Transportflugzeugen oder auch ringsherum um einen Tower angebracht sind. Gemäß der Erfindung können die Antennen im Prinzip beliebig groß ausgelegt werden, da sich bei den bekannten Antennen gemäß DE 40 07 611 oder 40 07 612 im Unterschied beispielsweise zu Hohlleiterantennen, SWG-(Sloted-Wave-Guide)Antennen oder auch "Phased Array" Antennen Laufzeitprobleme u.ä. nicht ergeben.

Bei der erfindungsgemäßen Lösung werden mit Hilfe des vorgesehenen Bildverarbeitungsverfahrens Phasenunterschiede zwischen den verschiedenen Einzelelementen unter Berücksichtigung der Form der Oberfläche, auf welcher die Antenne bzw. ihre Einzelelemente aufgebracht sind, so korrigiert, als seien die Einzelelemente der Antenne in einer virtuellen geradlinigen Ausrichtung nebeneinander angeordnet. Das bedeutet, eine auf einer beliebig geformten Oberflächenstruktur eines Trägers aufgebrachte Antenne arbeitet aufgrund der mittels des Bildverarbeitungsverfahrens durchgeführten Korrektur wie ein virtueller, geradliniger Array.

Eine weitere vorteilhafte Anwendungsmöglichkeit besteht darin, daß eine oder auch mehrere aus einer Anzahl von Einzelelementen bestehenden Antennen so aufgebracht werden können, daß unterschiedliche Sektoren erfaßt werden. Somit ist gemäß der Erfindung ein sektorabbildendes Radar geschaffen, bei welchem beispielsweise bei einem bewegten Träger, wie einem Flugzeug, nicht nur der in Flugrichtung weisende Sektorbereich, sondern auch Sektorbereiche senkrecht zur Flugrichtung sowie die dazwischen liegenden Sektorbereiche ohne Schwierigkeit erfaßt werden können.

Hierbei können zum Senden und Empfangen Anzahl und Position der jeweils verwendeten Antennenelemente flexibel ausgelegt werden. Auch können Anzahl und Position der einzelnen Antennenelemente beim Senden und Empfangen unterschiedlich sein.

Gemäß einer bevorzugten Einsatzmöglichkeit des erfindungsgemäßen Radarsystems können die aus einer Anzahl von Einzelelementen gebildeten Antennen, mit welchen unterschiedliche Sektoren erfaßt werden, auch mit verschiedenen Moden betrieben werden, beispielsweise einem SAR (Synthetic Aperture Radar), einem Squint-SAR-Mode oder FLAR (Foward Looking Aperture Radar).

Somit können gemäß der Erfindung auch unterschiedlich arbeitende Radarverfahren verschiedenen Sektoren der auf einem Trägerkörper beliebiger Form aufgebrachten Antenne zugeordnet werden, wie beispielsweise gepulstes Radar, auch mit einem adaptiven Chirp, FM CW-Radar, (Silent-Radar), Monopuls-Radar u.ä..

Zur Erstellung eines digitalen Geländemodels oder auch zur Höhenbestimmung von Zielen kann die SAR-Interferometrie in Along Track und Cross Track eingesetzt werden. Darüber hinaus ist mit Hilfe der SAR-Interferometrie eine Detektion von Bewegungen, so beispielsweise die Fließgeschwindigkeit von Wasser erfaßbar oder auch ein MTI-Mode durchführbar. Darüber hinaus ist bei Einsatz der einer Trägeroberfläche angepaßten Antenne und entsprechend nachgeordneten Radarverfahren auch eine Kombination beispielsweise mit Wetterradar und Überwachungsradar möglich.

Bei dem erfindungsgemäßen Radarsystem können auch ein Einzelelement oder einige der Anzahl von Einzelelemente zum Senden und der Rest der Antennen-Einzelelemente zum kohärenten Empfang verwendet werden.

Die Einzelelemente der Antenne(n) können beispielsweise Hornstrahler sein, die unmittelbar auf der Oberfläche des Trägerkörpers angebracht sein können. Die Einzelelemente der Antenne können jedoch auch Streifenleitungs- oder Strip Line-Antennenelemente sein, die nebeneneinander in vorgegebenem, vorzugsweise gleich großem Abstand auf einer biegsamen flexiblen Unterlage vorgesehen sind, die dann in Ihrer Gesamtheit auf der Trägeroberfläche aufgebracht werden, da sich die biegsame Antennenunterlage gewissermaßen an die Kontur des Trägerkörpers "anschmiegt".

So kann beispielsweise eine gemäß der Erfindung biegsame oder flexibel ausgeführte Antenne beispielsweise am Flugzeugrumpf oder auch an der Flugzeugnase, an der Tragflügelvorderkante, gegebenenfalls auch unter den Vorflügeln, oder an einer Fahrwerkverkleidung, überhaupt an allen den Stellen des Flugzeugs angebracht werden, die sich für ein An- oder Aufbringen einer solchen Antenne eignen. Durch das Anbringen bzw. Aufbringen einer solchen Antenne auf den vorerwähnten Bereichen eines Flugzeugs wird dessen Aerodynamik beispielsweise bei Verwenden von Streifenleitungs- oder Strip Line-Antennenelementen nur unwesentlich beeinflußt.

Da die eingangs erwähnten Antennen unabhängig von der Geschwindigkeit des Trägers einsetzbar sind, kann das erfindungsgemäße Radarsystem auch in Verbindung mit stationären Trägern, wie vorstehend schon erwähnt an einem Tower oder beispielsweise auch an anderen geeigneten Stellen von Gebäuden, wie Flughafengebäuden zum Einsatz gebracht werden.

Nachfolgend wird die Erfindung anhand der Zeichnung im einzelnen näher erläutert. Es zeigen:
- Fig. 1: eine Draufsicht auf eine Ausführungsform einer aus einer Anzahl Einzelelementen bestehenden Antenne, und
- Fig.2: eine schematische Darstellung einer Einsatzmöglichkeit des erfindungsgemäßen Radarsystems zum Abbilden von Sektoren.

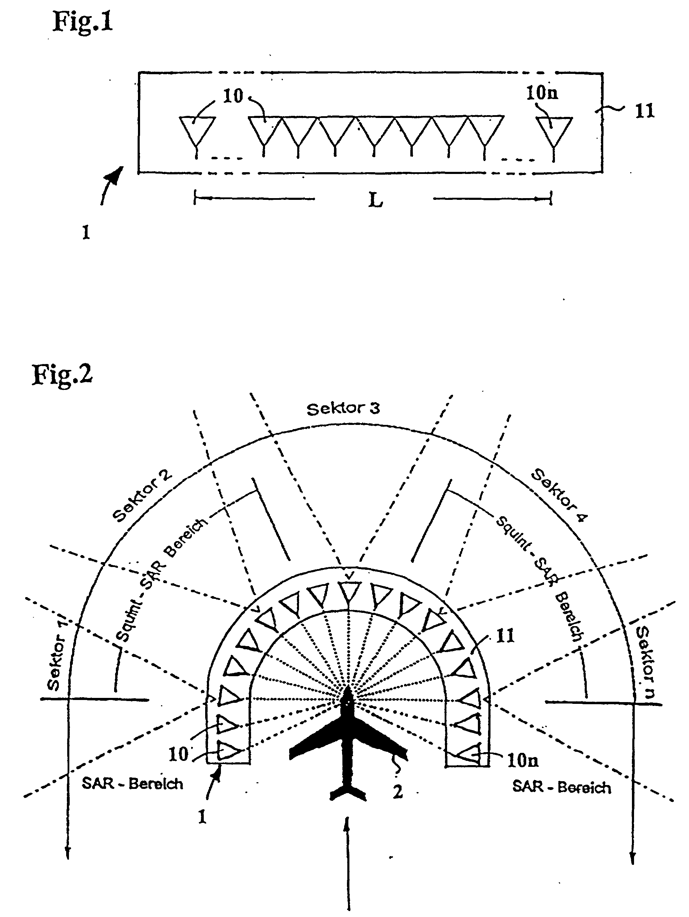

In Fig.1 ist schematisch eine in ihrer Gesamtheit mit 1 bezeichnete Antenne wiedergegeben, bei welcher auf einer biegsamen Unterlage 11 eine Anzahl von Einzelelementen 10 bis 10n vorgesehen sind. Die Einzelelemente können beispielsweise Streifenleitungs- oder Strip Line-Antennenelemente sein.

Unter der Antenne 1 ist in Fig.1 eine mit L bezeichnete Antennenlänge eingetragen. Bei einer vorgegebenen Aperturlänge ℓ jedes der n Einzelelemente und bei einem der Aperturlänge ℓ bzw. der halben Aperturlänge ℓ/2 entsprechenden Abstand ergibt sich eine Antennenlänge L = n · ℓ (DE 40 07 611) bzw. eine Antennenlänge L = n ℓ/2 (DE 40 07 612).

In Fig.2 ist eine Einsatz- bzw. Verwendungsmöglichkeit von Antennen gemäß Fig.1 schematisch dargestellt. In Fig.2 ist ein Schattenriß eines Flugzeugs 2 wiedergegeben, an dessen vorderen Teil beispielsweise eine aus einer Anzahl Einzelelementen gebildete Antenne 1 vorgesehen ist. Zur Verdeutlichung der Darstellung ist die Antenne 1 mit den beispielsweise auf einer biegsamen Unterlage 11 aufgebrachten Einzelelementen 10 im Abstand von dem vorderen Teil des Flugzeugs dargestellt, wobei durch gepunktete Linien die Lage der Einzelelemente am Flugzeug angedeutet ist.

Parallel zu den etwa in einem Halbkreis angeordneten Einzelelementen 10 der Antenne 1 ist in einem größeren Abstand ein gestrichelt wiedergegebener Halbkreis dargestellt, der an beiden Enden in eine Gerade übergeht. Außerhalb des Halbkreises sind eine Anzahl Sektoren, nämlich Sektor 1 bis Sektor n eingetragen. Die einzelnen Sektoren 1 bis n sind jeweils durch zwei strichpunktierte Linien begrenzt.

Hierbei ist dem ersten Sektor 1 und dem letzten Sektor n jeweils ein SAR-Bereich zugeordnet, wobei jeweils rechts und links die untersten Einzelelemente 10 der Antenne 1 etwa unter 90° zur Flugrichtung ausgerichtet sind und damit für eine SAR-Abbildung herangezogen werden können.

Ein im wesentlichen dem Sektor 2 bzw. dem Sektor 4 entsprechender Bereich ist als Squint-SAR-Bereich bezeichnet, wobei die dem Squint-SAR-Bereich zugeordneten Einzelelemente 10 der Antenne 1 schräg nach vorne unten ausgerichtet sind, so daß sie für eine Squint-SAR-Anwendung eingesetzt werden können.

Mit dem im wesentlichen in Flugrichtung weisenden Sektor 3 kann mit den in diesem Sektor vorgesehenen Einzelelementen 10 der Antenne 1 Vorwärtssicht-Radar durchgeführt werden.

Wie in der vorstehenden Beschreibung ausgeführt, können je nach Bedarf die vorstehend beschriebenen Bereiche gleichzeitig betrieben werden oder es kann zwischen den einzelnen Sektoren bedarfsweise umgeschaltet werden.

## Patentansprüche

1. Radarsystem zum zweidimensionalen Abbilden von Sektoren der Erdoberfläche unter Verwendung einer Antenne (1), die an einem stationären oder fliegenden Träger angebracht ist und aus einer Anzahl von Einzelelementen (10) besteht, deren Empfangssignale zur Realisierung einer digitalen Kopplung der Einzelelemente gesondert digital ausgewertet und durch Korrelation mit einer speziellen vorgegebenen Referenzfunktion für jeden Winkelbereich digital zu einem Bild verarbeitet werden, **dadurch gekennzeichnet,** daß Korrekturmittel vorgesehen sind, die so ausgelegt sind, daß durch die zur Oberfläche des beliebig geformten Trägers konforme, nicht geradlinige Positionierung der Einzelelemente (10) der Antenne (1) verursachte Amplituden- und Phasenfehler sowie hierdurch verursachte Laufzeitunterschiede der an den Einzelelementen vorliegenden Empfangssignale so kompensiert werden, daß die Einzelelemente der Antenne eine virtuelle geradlinige Ausrichtung erhalten, wobei die virtuelle geradlinige Antenne so berechnet wird, daß Amplitudenkorrekturen gemäß dem Verhältnis der jeweiligen Amplitudendiagramme der real vorhandenen Einzelelemente und der virtuellen Einzelelemente, Phasenkorrekturen gemäß dem geometrischen Abstand zwischen den jeweiligen Einzelelementen und deren virtuellen Position und Laufzeitkorrekturen gemäß dem Unterschied der Laufzeit eines Empfangssignals zu den jeweils real vorhandenen Einzelelementen und zu den entsprechenden virtuellen Einzelelementen durchgeführt werden, so daß im Anschluß an die Korrekturmittel ein der virtuellen Antenne entsprechendes Empfangssignal erhalten wird.

2. Radarsystem nach Anspruch 1, **dadurch gekennzeichnet,** daß eine oder mehrere aus einer Anzahl von Einzelelementen (10) bestehende Antennen (1) auf der Trägeroberfläche so aufgebracht sind, daß unterschiedliche Sektorbereiche erfaßbar sind.

3. Radarsystem nach Anspruch 2, **dadurch gekennzeichnet,** daß die aus einer Anzahl von Einzelelementen (10) gebildeten Antennen (1), mit welchen unterschiedliche Sektorbereiche erfaßt werden, mit verschiedenen abbildenden Betriebsmodi, wie SAR (Synthetic Aperture Radar), Squint-SAR und FLAR (Forward Looking Aperture Radar) betreibbar sind, die mit einem einzigen Radargerät durch Verwendung eines entsprechenden Bilderzeugungsverfahrens realisiert sind.

4. Radarsystem nach einem der vorhergehenden Ansprüche, **dadurch gekennzeichnet,** daß zum Senden und Empfangen Anzahl und Position der jeweils verwendeten Einzelelemente (10) einer Antenne (1) flexibel auslegbar sind.

5. Radarsystem nach einem der vorhergehenden Ansprüche, **dadurch gekennzeichnet,** daß Anzahl und Position der Einzelelemente (10) der Antennen (1) beim Senden und Empfangen unterschiedlich sind.

6. Radarsystem nach einem der vorhergehenden Ansprüche, **dadurch gekennzeichnet,** daß die Einzelelemente der Antennen (1) als Streifenleitungselemente (10) realisiert und nebeneinander in vorgegebenem Abstand auf einer biegsamen, der Kontur einer Trägeroberfläche konform anpaßbaren Unterlage (11) aufgebracht sind.

## Claims

1. A radar system for two-dimensional terrestial sector imaging in making use of an antenna (1) mounted on a stationary or airborne carrier and comprising an array of individual elements (10), the reception signals of which for achieving a digital coupling of the individual elements are digitally analyzed separately and are digitally processed into an image by correlation with a specially defined reference function for each angular range, **characterized in that** correction means are provided designed so that the amplitude and phase errors caused by the position of said individual elements (10) of said antenna (1) conforming to said surface of said optionally shaped carrier not being planar as well as differences in the delay of said signals received by said individual elements caused thereby are compensated so that said individual elements of said antenna receive a virtual planar orientation, said virtual planar antenna being computed to implement amplitude corrections in accordance with the relation of each amplitude pattern of each real and virtual individual element, phase corrections in accordance with the geometrical spacing between each individual element and its virtual position and delay corrections in accordance with the difference in the delay of a reception signal to each real individual element and said corresponding virtual individual element so that said correction means furnishes a reception signal corresponding to the virtual antenna.

2. The radar system as set forth in claim 1, characterized in that one or more antennas (1) consisting of an array of individual elements (10) is/are mounted on said surface of said carrier so that different sector ranges can be detected.

3. The radar system as set forth in claim 2, characterized in that said antennas (1) comprising an array of individual elements (10) for detecting various sector ranges can be operated in various operating modes, for example as a synthetic aperture radar (SAR), squint SAR or as a forward looking aperture radar (FLAR) achieved by a single radar apparatus by using a corresponding method of imaging.

4. The radar system as set forth in any of the preceding claims, characterized in that the number and position of said individual elements (10) of an antenna (1) used in each case can be designed flexibly for transmission and reception.

5. The radar system as set forth in any of the preceding claims, characterized in that the number and position of said individual elements (10) of said antennas (1) differ in transmission and reception.

6. The radar system as set forth in any of the preceding claims, characterized in that said individual elements of said antennas (1) are strip-line elements (10) mounted juxtaposed on a defined center-spacing on a flexible base (11) conforming to the contour of said carrier surface.

## Revendications

1. Système de radar pour la représentation bidimensionnelle de secteurs de la surface du sol moyennant l'utilisation d'une antenne (1), montée sur un support fixe ou volant et qui est constituée par un certain nombre d'éléments individuels (10), dont les signaux de réception sont évalués séparément d'une manière numérique pour réaliser un couplage numérique des éléments individuels et sont traités numériquement pour former l'image par corrélation avec une fonction de référence spéciale prédéterminée, pour chaque plage angulaire, caractérisé en ce qu'il est prévu des moyens de correction, conçus de telle sorte que des défauts d'amplitude et de phase, qui sont provoqués par le positionnement non rectiligne, conforme à la surface du support de forme quelconque, des éléments individuels (10) de l'antenne (1), et que des différences de temps de propagation, qui sont provoquées de ce fait, des signaux de réception présents au niveau des éléments individuels sont compensées de telle sorte que les éléments individuels de l'antenne prennent un alignement rectiligne virtuel, l'antenne rectiligne virtuelle étant calculée de telle sorte que des corrections d'amplitude sont exécutées sur la base du rapport des diagrammes respectifs d'amplitude des éléments individuels réellement présents et des éléments individuels virtuels sur la base de corrections de phase en fonction de la distance géométrique entre les éléments individuels respectifs et de leur position virtuelle et sur la base de corrections du temps de propagation conformément à la différence du temps de propagation d'un signal de réception vers les éléments individuels respectifs réellement présents et vers les éléments individuels virtuels correspondants, de sorte qu'en aval des moyens de correction, on obtient un signal de réception qui correspond à l'antenne virtuelle.

2. Système de radar selon la revendication 1, caractérisé en ce qu'une ou plusieurs antennes (1), constituées par un certain nombre d'éléments d'antenne (10), sont montées sur la surface de support de telle sorte que l'on peut détecter différentes zones en forme de secteurs.

3. Système de radar selon la revendication 2, caractérisé en ce qu'on peut faire fonctionner les antennes (1), qui sont formées par un nombre d'éléments individuels (10) et au moyen desquels des zones différentes de secteurs sont détectées, avec différents modes de fonctionnement de représentation d'images, comme par exemple le mode SAR (Synthetic Aperture Radar), le mode Squint-SAR et FLAR (Forward Looking Aperture Radar), qui sont réalisés avec un seul appareil radar moyennant l'utilisation d'un procédé correspondant de production d'images.

4. Système de radar selon l'une des revendications précédentes, caractérisé en ce que pour l'émission et la réception, le nombre et la position des éléments individuels (10) respectivement utilisés d'une antenne (1) peuvent être choisis d'une manière souple.

5. Système de radar selon l'une des revendications précédentes, caractérisé en ce que le nombre et la position des éléments individuels (10) de l'antenne (1) sont différents lors de l'émission et lors de la réception.

6. Système de radar selon l'une des revendications précédentes, caractérisé en ce que les éléments individuels des antennes (1) sont réalisés sous la forme d'éléments (10) de lignes en forme de bandes et sont disposés côte à côte, à une distance prédéterminée, sur un support flexible (11), qui peut être adapté de manière à correspondre au contour d'une surface du support.
